# FASCICULE DE BREVET EUROPEEN

(11) **EP 0 582 050 B1**
(45) Date de publication et mention de la délivrance du brevet: **17.12.1997**
(21) Numéro de dépôt: 93108158.2
(22) Date de dépôt: 19.05.1993
(51) Int. Cl.: A23L 1/221, A23L 1/23, A23L 1/227, A23L 1/231

(54) **Procédé de préparation d'un agent aromatisant**
Verfahren zur Herstellung eines Geschmackstoffes
Process for preparing a flavouring agent

(30) Priorité: 06.08.1992 CH 2471/92
(43) Date de publication de la demande: 09.02.1994
(73) Titulaire: SOCIETE DES PRODUITS NESTLE S.A., 1800 Vevey (CH)
(72) Inventeur: Cevallos, Agustin, Quito (EC); Izquierdo, Patricia, Quito (EC); Wahli, Christian, Quito (EC)
(74) Mandataire: Vuille, Roman

(56) Documents cités:
- EP-A- 0 087 522
- EP-A- 0 421 319
- FR-A- 2 245 295
- US-A- 4 572 836
- DATABASE WPI Section Ch, Week 9005, Derwent Publications Ltd., London, GB; Class D13, AN 90-032907 & JP-A-1 309 655 (SODA PERFUME) 14 Décembre 1989
- P.ROBERT 'Dictionnaire alphabétique & analogique de la langue française' 1973 , SOCIETE DU NOUVEAU LITTRE , PARIS pages 16 ,1000 *page 16 "ache",page 1000 "livèche"*
- 'Petit Larousse Illustré' 1973 , LAROUSSE , PARIS page 11 * "ache"*

## Description

La présente invention a trait à un procédé de préparation d'un agent aromatisant, ayant pour base une herbe aromatique, la livèche, et pouvant être incorporé, à divers plats alimentaires.

Il est connu selon EP-A-0 421 319 de préparer un agent aromatisant ayant pour base la livèche, en traitant thermiquement un mélange comprenant ladite livèche sous forme d'extrait, de pulpe ou de feuilles, au moins un sucre, au moins une source d'acide aminé et éventuellement un sel, puis en concentrant et déshydratant le mélange traité thermiquement. Un mode d'exécution particulier de ce procédé consiste à préparer un mélange comprenant un extrait liquide de livèche, comme sucre un mélange de glucose et de saccharose, et comme source d'acides aminés de la purée d'oignons, à brasser le mélange ainsi formé, puis à le traiter thermiquement à 90°C pendant une heure, avant de le refroidir et de le déshydrater de manière à obtenir un agent aromatisant en poudre.
Le produit ainsi obtenu présente toutefois un goût doux, voire sucré, dû probablement à la présence de sucres contenus dans l'oignon, lesdits sucres n'ayant pas été totalement utilisés lors du traitement thermique. Le goût doux ainsi développé interfère avec le goût de viande que l'on souhaite développer pour le présent agent.

Le but de la présente invention est de permettre la préparation d'un agent aromatisant à base de livèche et d'oignons, dont le goût est moins doux que celui préparé selon l'art antérieur et plus proche du goût de viande recherché, ceci tout en restant constant dans le temps.

A cet effet, l'objet de la présente invention est un procédé de préparation d'un agent aromatisant dans lequel on prépare un mélange comprenant un extrait de livèche, un sucre et un extrait d'oignon, on effectue une fermentation lactique du mélange puis on traite thermiquement le mélange fermenté.

Un avantage de ce procédé est de permettre la préparation d'un agent aromatisant à base d'extrait de livèche, présentant un goût de viande comparable à celui d'un agent aromatisant à base d'extrait de livèche préparé à partir de glutamate de sodium comme source d'acides aminés, mais ne comprenant pas de glutamate à quelque étape que ce soit du procédé.
Un autre avantage a été de constater que l'agent aromatisant préparé selon le présent procédé présente un goût renforcé de viande comme si l'étape de fermentation avait pour effet de "booster" la flaveur développée.

D'autres avantages et caractéristiques de l'invention sont donnés dans la description, dans laquelle les parties et les pourcentages sont en poids.

Afin de préparer un extrait de livèche qui se prête à la mise en oeuvre du procédé selon l'invention, on peut laver la livèche fraîchement récoltée à l'eau froide, la laisser égoutter, couper les feuilles puis les presser, par exemple avec une presse mécanique, ou une presse à vis, de manière à obtenir une matière liquide ou extrait, et une matière solide ou pulpe.
On peut pasteuriser l'extrait de livèche ainsi obtenu, par exemple par chauffage 1 à 3 minutes à 70-85°C, puis on peut clarifier l'extrait pasteurisé en ajoutant, par exemple, 1% en poids d'aide de filtration tel que la célite, à l'extrait de livèche et en mélangeant pendant 1 à 15 minutes, avant d'effectuer une séparation, par exemple par centrifugation ou filtration.
On peut ensuite concentrer l'extrait clarifié, par exemple par évaporation sous pression réduite, à une température de 60-70°C, sous une pression de 100-200 mbar, de manière à obtenir un extrait de livèche présentant un taux de matière sèche de 60-80%.

Un sucre qui se prête à la mise en oeuvre du procédé selon la présente invention peut être, par exemple, un mono- ou un disaccharide. On utilise, de préférence, le saccharose et/ou le fructose.
Concernant l'extrait d'oignon, on peut utiliser de l'oignon en poudre, moulu et déshydraté, ou de l'oignon frais réduit en purée.

Si l'on utilise de l'oignon frais, on peut, de préférence, le traiter thermiquement avant sa mise en oeuvre, par exemple pendant 8-14 minutes, à 110-130°C, à l'aide de vapeur surchauffée, de manière à inactiver les enzymes qu'il pourrait contenir.
De plus, si l'on utilise de l'oignon frais, on choisit de préférence un extrait présentant un taux de matière sèche de l'ordre de 15-30%, étant donné que plus ce taux est élevé, plus l'arôme de viande développé est intense.
Si l'on utilise de l'oignon déshydraté, se présentant sous forme de poudre, son taux initial de matière sèche, avant déshydratation, ne joue pas un rôle important.
On prépare donc un mélange comprenant un extrait de livèche, un sucre et un extrait d'oignon.

Les proportions de chaque ingrédient dudit mélange sont choisies de préférence dans les domaines suivants: pour 3 parties en poids de matière sèche de livèche, on ajoute 0,8-1,3 parties de sucre et 0,8-1,3 partie de matière sèche d'extrait d'oignon. On ajoute éventuellement de l'eau de manière à obtenir un mélange présentant un taux de matière sèche de 20-30%. Le pH initial du mélange est en général de l'ordre de 6,0-6,3.

On effectue alors une fermentation lactique du mélange ainsi préparé.

Pour ce faire, on peut ajouter audit mélange une culture de bactéries, par exemple de Lactobacillus plantarum, Lactobacillus acidophilus, Lactobacillus casei, Lactobacillus pentosos, Leuconostoc mesenteroides, Pediococcus dextranicus, ou une culture de type yoghourt: L. bulgaricus + S. thermophilus, ou une levure telle que Saccharomyces cerevisiae. On ajoute de préférence ladite culture à raison de 1 à 3% pour un mélange présentant un taux de matière sèche de 20-30%.

On laisse alors fermenter le mélange, à une température de 30-40°C, jusqu'à obtention d'un pH de l'ordre de 3,5-4,5. La fermentation dure généralement entre 12 et 20 heures.

Le mélange ainsi fermenté est alors traité thermiquement, par exemple par chauffage à 85-95°C durant 2-3 heures. Le traitement thermique permet, en plus de l'inactivation des microorganismes utilisés durant la fermentation, de développer une réaction de Maillard entre les protéines et les sucres présents dans le mélange fermenté.

D'autre part, le présent traitement thermique peut également avoir pour fonction de déshydrater le mélange fermenté obtenu. Dans ce cas, on peut prolonger ledit traitement jusqu'à obtention du taux de matière sèche souhaité.

Il est à noter que le développement d'un arôme de type viande est observé lors de la déshydratation de 65% à 70% de matière sèche, et s'accentue pendant la suite du traitement thermique à 65-75°C, pendant 15-22 heures.
Il est également nécessaire de faire attention à ne pas trop traiter thermiquement le mélange fermenté, ce qui aurait comme effet de détruire l'arôme développé.

On obtient ainsi un agent aromatisant présentant un arôme de viande avec une note légumes, obtenu à l'aide d'un procédé utilisant uniquement des matières premières naturelles: l'extrait de livèche, qui remplace totalement le glutamate de sodium utilisé dans l'état de la technique, et l'extrait d'oignon qui permet de renforcer l'arôme développé, ledit procédé consistant en une fermentation lactique des matières premières de départ, ce qui permet le développement de l'arôme, puis en un traitement thermique du mélange fermenté qui permet d'une part de déshydrater le produit en le pasteurisant, et d'autre part de renforcer l'arôme développé.

Il est ainsi possible de développer un arôme présentant un goût de viande en utilisant l'acidité développée lors d'une fermentation lactique. De plus, il est possible de modifier l'intensité de l'arôme développé en contrôlant l'étape de déshydratation.

La présente invention est illustrée plus en détails dans les exemples qui suivent.

### Exemple 1

On prépare un mélange comprenant 3 parties de matière sèche d'extrait de livèche, 1 partie de matière sèche d'une purée d'oignons frais présentant un taux de matière sèche de 20%, 1 partie de saccharose et éventuellement de l'eau de manière à obtenir un taux de matière sèche de environ 22%. On ajoute audit mélange 1% d'une culture de L. plantarum et on laisse fermenter à 37°C.
Le pH du mélange décroît de 5,6 à 4,1, et l'acidité (% d'acide lactique) passe de 0,5 à 1,5, pendant les 10 premières heures de fermentation.

Le mélange ainsi fermenté est alors traité thermiquement par chauffage à 65°C, sous une pression de 130 mbar pendant environ 22 heures, puis refroidit rapidement jusqu'à 15°C, température à laquelle il est stocké.

On obtient ainsi un agent aromatisant pasteurisé et déshydraté, présentant un taux de matière sèche de 70% environ, qui peut être stocké pendant une longue période.

Si l'on évalue par dégustation, en donnant une note de 1 à 10, l'intensité de l'arôme de type viande développé au cours du traitement thermique, en fonction du taux de matière sèche obtenu, on obtient les résultats suivants (1: peu développé, 10: très développé):

| Taux de matière sèche % | 55 | 60 | 65 | 70 | 75 |
|---|---|---|---|---|---|
| Intensité de l'arôme | 4 | 4,5 | 7,0 | 7,9 | 3,9 |

Le développement de l'arôme est donc à son maximum lorsque l'on atteint un taux de matière sèche d'environ 70%.

### Exemple 2

On prépare un mélange présentant un taux de matière sèche de 20% comprenant 3 parties de matière sèche de livèche, 1 partie de sucre et 1 partie de matière sèche de différents extraits d'oignons frais. On effectue une fermentation lactique de ce mélange comme dans l'exemple 1.

On évalue alors l'acidité et l'intensité de l'arôme de type viande développé, en donnant une note de 1 à 10 aux différents mélanges fermentés obtenus. Une note de 1 signifie: "peu perceptible" et une note de 10 "très perceptible".

On obtient les résultats suivants:

| Extraits d'oignons | A | B | C | D | E |
|---|---|---|---|---|---|
| Taux de matière sèche initial de l'extrait d'oignon (%) | 6 | 9 | 14 | 17 | 22 |
| Acidité (%) | <1,0 | <1,0 | 1,0 | 1,5 | 1,5 |
| Arôme de type de viande | 3 | 3 | 4 | 5 | 7 |

Ainsi, lorsque l'on utilise comme extrait d'oignons, de l'oignon frais, plus le taux de matière sèche initial de l'extrait d'oignon est élevé, plus l'arôme de type viande développé est important.

### Exemple 3

On prépare un mélange comprenant 28% de sel, 11% de saccharose, 13,5% de maltodextrine, 22% d'agent aromatisant tel que préparé dans l'exemple 2 (taux de matière sèche de 70%), 12% d'extrait de viande, 6,5% de matière grasse d'origine végétale, 6% de levure et 1% d'un mélange de piment blanc moulu, de laurier moulu, d'oignon en poudre, de clou de girofle et de curcuma.
Le mélange ainsi préparé peut être utilisé à raison de 13,5 grammes dissous dans 500 ml d'eau, et confère au produit auquel il est ajouté un arôme intensifié de type viande.

## Revendications

1. Procédé de préparation d'un agent aromatisant dans lequel
- on mélange un extrait de livèche présentant de préférence un taux de matière sèche de 60 à 80 % avec un extrait d'oignon présentant de préférence un taux de matière sèche de 15 à 30 %, un sucre et, le cas échéant, de l'eau de sorte à atteindre un taux de matière sèche total de l'ordre de 20 à 30 %;
- on soumet le mélange à une fermentation lactique s'effectuant à une température comprise entre 30 et 40° C, jusqu'à obtention d'un pH de l'ordre de 3,5 à 4,5;
- finalement on soumet le mélange fermenté à un traitement thermique de sorte à inactiver les microorganismes présents et à permettre le développement d'une réaction de Maillard entre les protéines et les sucres présents dans le mélange fermenté.

## Claims

1. Process for preparing a flavouring agent in which
- a lovage extract having preferably a dry matter content of 60 to 80 % is mixed with an onion extract having preferably a dry matter content of 15 to 30 %, a sugar and, where necessary, water, so as to obtain a total dry matter content of the order of 20 to 30 % ;
- the mixture is subjected to a lactic fermentation carried out at a temperature of between 30 and 40°C, until a pH of the order of 3.5 to 4.5 is obtained ;
- finally, the fermented mixture is subjected to a heat treatment so as to inactivate the micro-organisms present and to permit the development of a Maillard reaction between the proteins and sugars present in the fermented mixture.

## Patentansprüche

1. Verfahren zur Herstellung eines Aromastoffs, in dem man
- einen Liebstöckelextrakt vorzugsweise mit einem Trockenmassegehalt von 60 bis 80 % mit einem Zwiebelextrakt vorzugsweise mit einem Trockenmassegehalt von 15 bis 30 %, mit einem Zucker und ggf. mit Wasser so mischt, daß man einen Gesamttrockenmassegehalt von etwa 20 bis 30 % erhält,
- die Mischung einer Milchsäuregärung unterzieht, die bei einer Temperatur von 30 bis 40°C stattfindet, bis man ein pH von etwa 3,5 bis 4,5 erhält
- und dann die fermentierte Mischung einer Wärmebehandlung unterzieht, so daß die vorhandenen Mikroorganismen inaktiviert werden und die Entwicklung einer Maillard-Reaktion zwischen den in der fermentierten Mischung vorhandenen Proteinen und Zuckern ermöglicht wird.
